# EUROPEAN PATENT SPECIFICATION

(11) **EP 0 965 496 B1**
(45) Date of publication and mention of the grant of the patent: **18.02.2004**
(21) Application number: 99111872.0
(22) Date of filing: 21.06.1999
(51) Int. Cl.: B60R 21/18

(54) **Combination of an inflatable belt and a tongue and combination of the inflatable belt and a webbing**
Kombination eines aufblasbaren Gurtes und einer Schlosszunge und Kombination des aufblasbaren Gurtes mit einem gewebten Gurtband
Combinaison d'une ceinture gonflable et d'une languette et combinaison de cette ceinture gonflable avec une sangle tissée

(30) Priority: 19.06.1998 JP 17307298
(43) Date of publication of application: 22.12.1999
(73) Proprietor: TAKATA CORPORATION, Shiga 529-1388 (JP)
(72) Inventor: Hideshima, Kei, c/o Takata Corporation, Echi-gun, Shiga 529-1388 (JP)
(74) Representative: Lins, Edgar, Dipl.-Phys. Dr.jur.

(56) References cited:
- WO-A-97/23367
- US-A- 3 970 329
- US-A- 5 346 250
- US-A- 5 393 091

## Description

### BACKGROUND OF THE INVENTION

### Field of the Invention

The present invention relates to a unit for protecting an occupant in a vehicle such as an automobile during a vehicle collision and, more particularly, to a combination of an inflatable belt, which is capable of being inflated with gas from a gas generator; and a tongue, according to the preamble of claim 1.

### Description of Related Art

As is well known, an inflatable belt device of a seat belt device has an inflatable belt as a part of a webbing of the seat belt device. In the event of a vehicle collision or rollover, a gas generator is actuated so that the inflatable belt is inflated. Japanese patent publication 5-85301 A (United States Patent No. 5,346,250) discloses an inflatable belt device wherein one end of the inflatable belt is connected to a tongue. The tongue and a buckle, into which the tongue is inserted, are each provided with gas passages for introducing gas into the inflatable belt.

The other end of the inflatable belt is sewn to a webbing of a normal seat belt. A seat belt retractor winds up the webbing. The inflatable belt is connected to the tongue so that a cylindrical portion provided at the rear end of the tongue is fitted into the end of the inflatable belt and is tightened up by a hose clamp at the outside thereof.

The closest prior art document US-A-3,970,329 discloses an inflatable belt restraint for vehicle safety systems secured to a terminal webbing with longitudinal stitching such as a zig-zag stitch capable of yielding in at least two dimensions when the belt is inflated to prevent failure of the stitching. The terminal webbing is secured to a retractor by a buckle tongue for securing the band around the occupant to the car.

WO 97/23367 A1 discloses an inflatable shoulder belt portion, attached to a non-inflatable lap belt portion by stitching. A coupling member removably couples the lap belt portion to a retainer at the inner side of a seat. The lap belt portion is guided through an opening in the coupling member.

US-A-5,393,091 discloses an inflatable seatbelt system with a shoulder belt and a lap belt. The lap belt portion is movably guided through an opening in a tongue; the lap belt portion is not inflatable.

The strength of the connecting portion between the inflatable belt and the tongue and the sewn portion between the inflatable belt and the webbing does not have as high a strength as possible.

These difficulties or problems with the current alternatives are not intended to be exhaustive, but are many which tend to reduce the desirability of known seat belts. Other notable problems may exist, those presented above, however, should be sufficient to demonstrate that devices appearing in the past are amenable to worthwhile improvement.

### SUMMARY OF THE INVENTION

It is an object of the present invention to provide a combination of an inflatable belt and a tongue having a high strength of connection.

It is another object of the invention to provide a combination of an inflatable belt and a webbing having a high connecting strength.

A preferred embodiment, which is intended to accomplish at least some of the above objects, includes a tongue having an opening in a rear portion. An inflatable belt, into which a gas is introduced, is connected to the tongue. One end of the inflatable belt passes through the opening and is folded back such that the end is superposed on and sewn to the inflatable belt.

Another preferred embodiment includes an inflatable belt and a webbing sewn to the inflatable belt, wherein a portion of the webbing is inserted into and sewn to the inflatable belt.

Additional objects and advantages of the invention will be set forth in the following description of the preferred embodiments and, in part, will be obvious from the description or through practicing the invention. The objects and advantages may be realized through the instrumentalities and combinations particularly pointed out in the appended claims.

### BRIEF DESCRIPTION OF THE DRAWINGS

The accompanying drawings, which are incorporated in and constitute a part of the specification, illustrate presently preferred embodiments of the invention, and, together with the above general description and the following detailed description, serve to explain the principles of the invention.

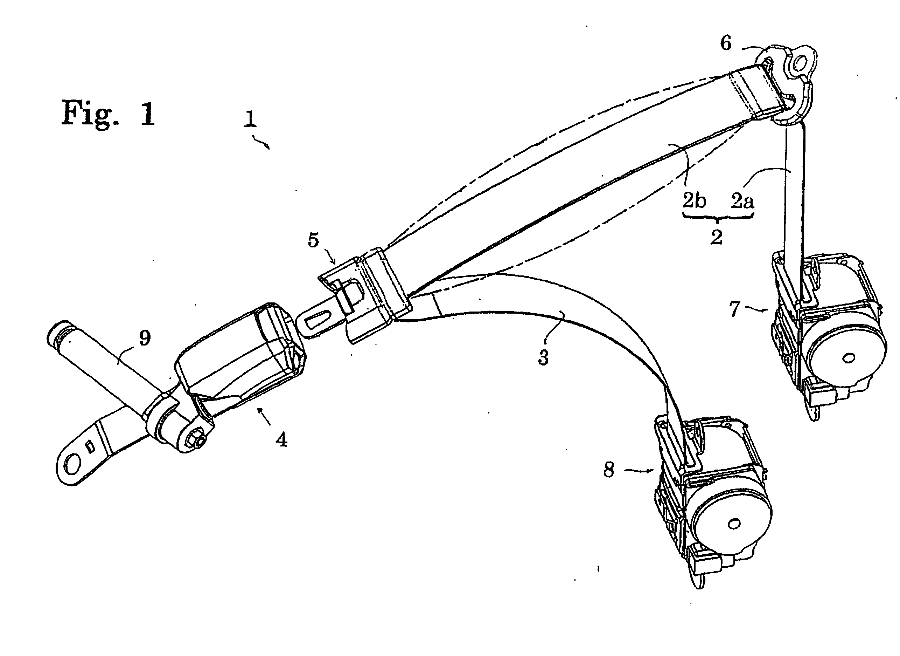

Figure 1 is a perspective view showing an inflatable belt device which is provided with a combination of an inflatable belt and a tongue and a combination of the inflatable belt and a webbing according to an embodiment which is not part of the present invention;
Figure 2 is a plan view of the connecting portion between the inflatable belt and the tongue of Figure 1;
Figures 3a and 3b are a plan view and a sectional view, respectively, for illustrating the structure of the combined unit of the inflatable belt and the webbing of Figure 1;
Figure 4 is an exploded perspective view showing the structure of a combined unit of an inflatable belt and a tongue according to another embodiment of the invention;
Figures 5a, 5b, and 5c are structural views for illustrating the combined unit shown in Figure 4: Figure 5a is a plan view, Figure 5b is a right-side view, and Figure 5c is a front view;
Figure 6 is an exploded perspective view showing the structure of a combined unit of an inflatable belt and a tongue according to still another embodiment of the invention; and
Figures 7a and 7b are structural views for illustrating the combined unit shown in Figure 6: Figure 7a is a plan view and Figure 7b is a right-side view.

### DETAILED DESCRIPTION OF PREFERRED EMBODIMENTS

A first embodiment of a combination of an inflatable belt and a tongue of the present invention includes an inflatable belt into which gas is introduced, and a tongue. The inflatable belt includes a bag and a mesh webbing enclosing the bag. An end of the inflatable belt is connected to the tongue. The rear portion of the tongue has an opening. The end of the inflatable belt is passed through the opening and is folded back at the opening to be superposed on the inflatable belt, and the superposed portions are then sewn together.

A second embodiment of a combination of an inflatable belt and a webbing which is not part of the present invention includes an inflatable belt and a webbing sewn to the inflatable belt. The inflatable belt has a bag and a mesh webbing enclosing the bag. An end of the webbing is inserted into the mesh webbing and is then sewn to the inflatable belt.

The inflatable belt device 1 preferably includes a shoulder belt 2, a lap belt 3, a buckle 4, a tongue 5 which is inserted and engaged with the buckle 4 when a vehicle occupant wears the seat belt, and a deflector fitting 6 for guiding the shoulder belt 2.

The shoulder belt 2 preferably includes a normal webbing 2a, which is the same as a typical conventional seat belt, and an inflatable belt 2b connected to an end of the webbing 2a. The deflector fitting 6 slidably hangs the webbing 2a. The other end of the webbing 2a is connected to a seat belt retractor 7, which preferably has an emergency locking mechanism (ELR), fixed to the vehicle body. The webbing 2a is arranged such that it is wound into the seat belt retractor 7.

The inflatable belt 2b preferably is positioned so that it contacts the occupant. The inflatable belt 2b is also connected to the tongue 5 at an end opposite to the end connected to the webbing 2a.

The lap belt 3 includes a normal webbing, which is the same as a typical conventional seat belt, having one end connected to the tongue 5 and the other end connected to a seat belt retractor 8 (ELR), which is fixed to the vehicle body.

Further, a gas generator 9 is connected to the buckle 4 and is actuated and generates high-pressure gases in emergencies, for example, vehicle collisions, rollovers, and the like. The tongue 5 and the buckle 4 are provided with passages for introducing gas from the gas generator 9 into the inflatable belt 2b. When the gas generator 9 is actuated, the gas is introduced into the inflatable belt 2b through these passages so that the inflatable belt 2b is inflated.

The inflatable belt 2b preferably has a bag and a mesh webbing enclosing the bag. The bag is made of a material that prevents gas from permeating through the bag (e.g. fabric coated with resin) and is formed in a long envelope-like configuration. The bag preferably is folded in a long band-like configuration.

The mesh webbing encloses the folded band-like bag. The mesh webbing preferably includes a knit member, which is hard to stretch in the longitudinal direction, but is supple and stretchable in the width direction or the inflating direction.

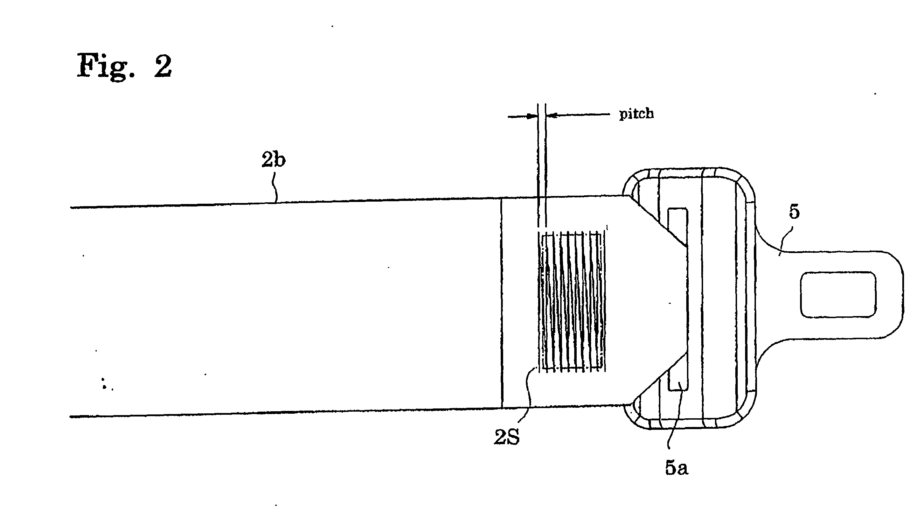

Tb connect the inflatable belt 2b to the tongue 5, an end of the inflatable belt 2b is passed through an opening 5a of the tongue 5 and is folded back at the opening 5a such that the end that has passed through the opening 5a is superposed onto the inflatable belt 2b. Then, the superposed portions are sewn with sewing yarn as shown in Figure 2. Numeral 2S designates stitches with the sewing yarn. After that, a synthetic resin is molded on a portion including a rear portion of the tongue 5 and the end of the inflatable belt 2b to form a cover mold.

Stitching lines of the stitches 2S extend in the width direction of the inflatable belt 2b. The area of the stitched portion preferably is in a range from 1496 to 2288 mm² (34 mm to 50 mm × 44 mm), the preferable pitch of the stitches is 3 mm, the preferred pitch between the adjacent stitching lines is 2 mm, and the preferable number of the stitches is in a range from 513 to 763.

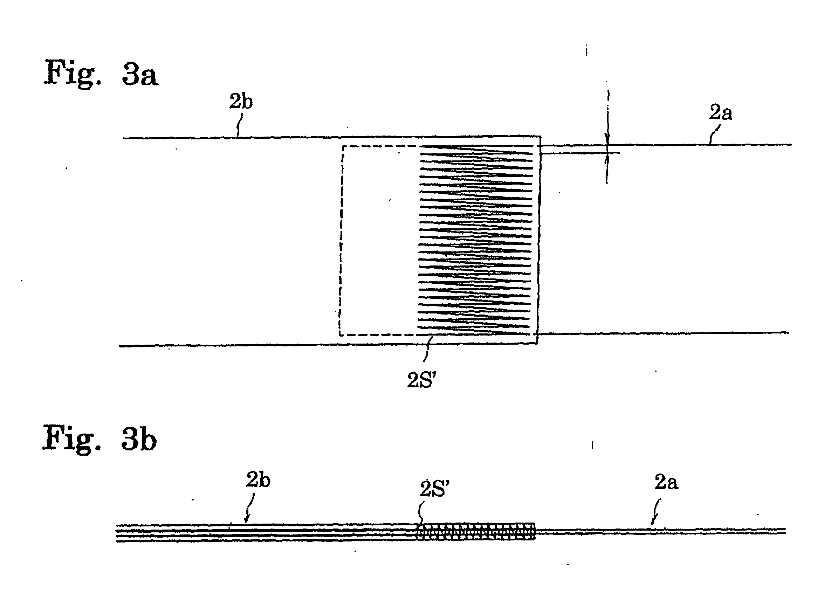

The inflatable belt 2b and the webbing 2a are preferably sewn to each other. That is, an end of the webbing 2a is inserted into the other end of the inflatable belt 2b and laid flat. Subsequently, the webbing 2a and the inflatable belt 2b are then stitchod such that they are sewn together as shown in Figures 3a, 3b. In addition, a synthetic resin preferably is molded onto the connected portion to form a cover.

As shown in Figures 3a and 3b, stitching lines of stitches 2S', which sew the inflatable belt 2b and the webbing 2a together, extend in the longitudinal direction of the inflatable belt 2b. Preferably, the area of the stitches 2S' is 1400 mm² (28 mm × 50 mm), the pitch of the stitches is 3 mm, the pitch between the adjacent stitching lines is 2 mm, and the number of the stitches 2S' is about 516.

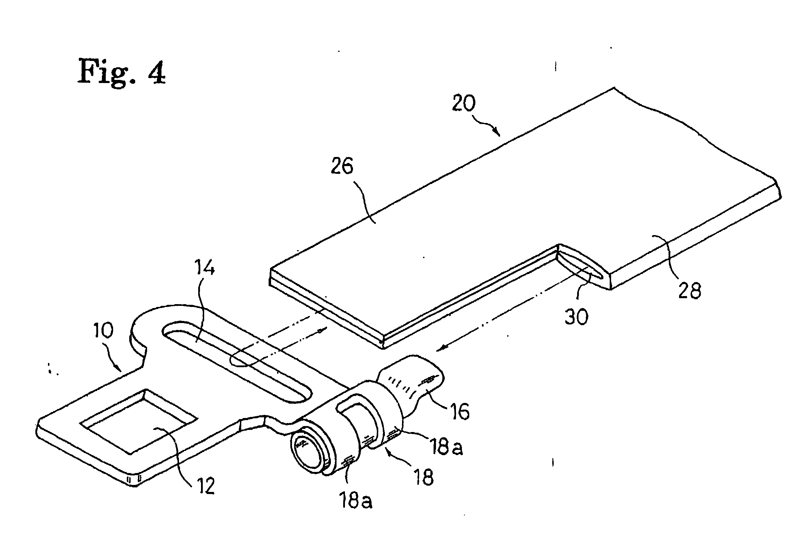

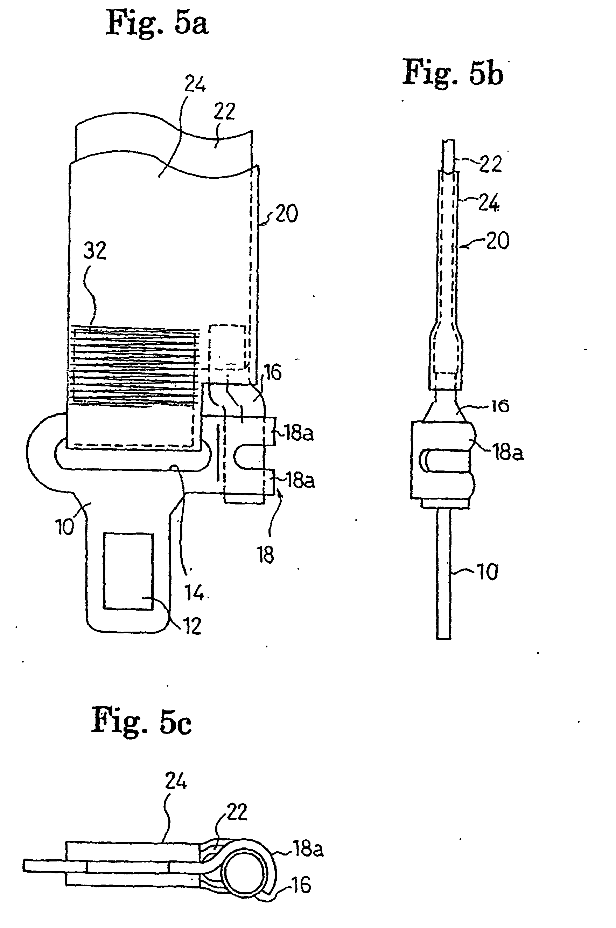

Figures 4, 5a, 5b and 5c show a combination of an inflatable belt and a tongue according to another embodiment. A tongue 10, which is designed as a plate member, preferably has a latch hole 12 formed in a front end portion, and an opening 14 formed in a rear end portion for passing through an end of the inflatable belt. The inflatable belt 20 preferably includes a bag 22 and a mesh webbing 24 enclosing the bag 22.

The bag 22 is made of a material that prevents gas from permeating through the outer layer (e.g. fabric coated with resin) and is formed in a long envelope-like configuration. The bag 22 is folded in a long band-like configuration. The mesh webbing 24 encloses the folded band-like bag 22. The mesh webbing 24 preferably includes a knit member, which is hard to stretch in the longitudinal direction, but is supple and stretchable in the width direction or the inflating direction.

As shown in Figure 4, the inflatable belt 20 includes a wide portion 28 and a narrow portion 26 at one end side. The narrow portion 26 is passed through the opening 14 of the tongue 10. The boundary between the narrow portion 26 and the wide portion 28 is formed in a step-like configuration extending in the width direction of the inflatable belt 20. The inflatable belt 20 has an insertion hole 30 for a pipe 16 at the step-like portion.

A side portion of the tongue 10 has a pipe holder 18 for the pipe 16. The pipe holder 18 includes claws 18a formed in a C-like configuration. The pipe 16 spreads out the claws 18a when it is set to the pipe holder 18. The pipe 16 has a cylindrical front portion that is held by the pipe holder 18. The _rear portion of the pipe 16 is formed in a flat columnar configuration.

To connect the inflatable belt 20 to the tongue 10, the narrow portion 26 is passed through the opening 14. During this, the rear end of the pipe 16 is inserted into the insertion hole 30. Then, the narrow portion 26 is folded back at the opening 14, superposed onto the wide portion 28, and then sewn together by a sewing yarn. Numeral 32 designates stitches with the sewing yarn. Stitching lines of the stitches 32 extend in the width direction of the inflatable belt. Preferably, the area of the stitched portion is 960 mm² (24 mm × 40 mm), the pitch of the stitches is 3 mm, the pitch between the adjacent stitching lines is 2 mm, and the number of the stitches is about 333.

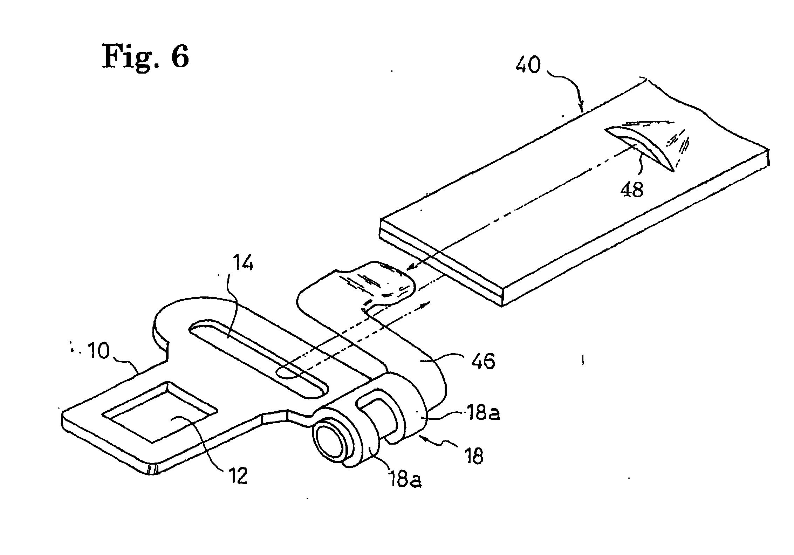

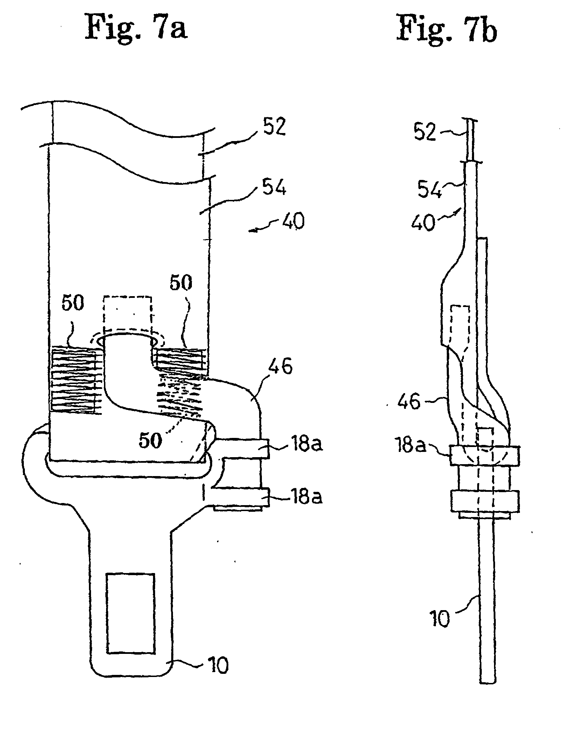

Figures 6, 7a and 7b show a combined unit of an inflatable belt and a tongue according to still another embodiment of the present invention. An inflatable belt 40 preferably includes a bag 52 and a mesh webbing 54 enclosing the bag 52. According to this embodiment, an insertion hole 48 is arranged at a portion about the middle in the width direction of the inflatable belt 40.

A pipe 46 has a bent portion extending to about the middle in the width direction of the tongue 10, thereby allowing the bent portion to be inserted into the insertion hole 48. The pipe 46 also has a cylindrical portion that is held by a pipe holder 18 of a tongue 10. The rear portion, other than the cylindrical portion, of the pipe 46 is formed in a flat columnar configuration.

An end portion of the inflatable belt 40 is passed through an opening 14 of the tongue 10. During this, the end of the pipe 46 is inserted into the insertion hole 48 of the inflatable belt 40. The end portion of the inflatable belt 40 is folded back at the opening 14, superposed onto the inflatable belt 40, and then the superposed portions are sewn together. Numeral 50 in Figure 7a designates stitches for this sewing. Preferably, the area of the stitched portion is 560 mm² ((20 mm × 16 mm) × 2), the pitch of the stitches is 3 mm, the pitch between the adjacent stitching lines is 2 mm, and the number of the stitches is about 224.

A buckle into which the tongue 10 of Figures 4-7b is inserted has a gas outlet, which confronts the inlet of the pipe 16 or 46 of the tongue 10 when the tongue 10 is engaged with the buckle, and also has an inflator.

Before the inflator is actuated, the inflatable belt 20 or 40 is kept in a flat band-like configuration. As the inflator (gas generator) is actuated, gas passes through the pipe 16 or 46 to enter into the inflatable belt 20 or 40 such that the inflatable belt 20, 40 is inflated.

As described above, according to the present invention, the strength at a connecting portion between an inflatable belt and a tongue and a connecting portion between an inflatable belt and webbing can he increased.

Additional modifications and advantages may readily appear to one skilled in the art.

## Claims

1. A safety belt (2) for a vehicle comprising:
a tongue (5, 10) having an opening (5a, 14) in a rear portion; and
an inflatable belt (20, 40) connected to the tongue (5, 10) and into which a gas is introduced,
**characterized in that** one end portion of the inflatable belt (20, 40), into which a gas is introduced, passes through the opening (5a, 14) and is folded back such that the end is superposed on and sewn to the inflatable belt (20, 40) at a sewn portion.

2. A safety belt as claimed in claim 1, wherein the inflatable belt (2b, 20, 40) includes a bag (22, 52) and a mesh webbing (24, 54) enclosing the bag (22, 52).

3. A safety belt as claimed in claim 1, wherein an area of the sewn portion of the inflatable belt (2b, 20, 40) is between 1496 mm² and 2288 mm².

4. A safety belt as claimed in claim 1, wherein a pitch of a plurality of stitches in the sewn portion of the inflatable belt is 3 mm.

5. A safety belt as claimed in claim 1, wherein a pitch between adjacent stitching lines in the sewn portion of the inflatable belt is 2 mm.

6. A safety belt as claimed in claim 5, wherein a plurality of stitches extend in a longitudinal direction of the inflatable belt.

7. A safety belt as claimed in claim 5, wherein an area of stitching is approximately 1400 mm² (28 mm x 50 mm).

8. A safety belt as claimed in claim 5, wherein a pitch of the stitches is 3 mm.

9. A safety belt as claimed in claim 5, wherein a pitch between adjacent stitching lines is 2 mm.

10. A safety belt as claimed in claim 5, wherein there are approximately 516 stitches connecting the webbing and the inflatable belt.

## Patentansprüche

1. Sicherheitsgurt (2) für ein Fahrzeug, mit:
einer Zunge (5, 10) mit einer Öffnung (5a, 14) in einem rückwärtigen Abschnitt; und
einem aufblasbaren Gurt (20, 40), der mit der Zunge (5, 10) verbunden ist und in den Gas eingeführt wird,
**dadurch gekennzeichnet, dass**
ein Endabschnitt des aufblasbaren Gurtes (20, 40), in den Gas eingeführt wird, durch die Öffnung (5a, 14) hindurchgeführt und derart zurückgeschlagen ist, dass das Ende auf den aufblasbaren Gurt (20, 40) aufgelegt und angenäht ist an einem genähten Abschnitt des aufblasbaren Gurtes (20, 40).

2. Sicherheitsgurt nach Anspruch 1, wobei der aufblasbare Gurt (2b, 20, 40) eine Tasche (22, 52) und eine die Tasche (22, 52) umschließendes Maschengurtband (24, 54) umfasst.

3. Sicherheitsgurt nach Anspruch 1, wobei eine Fläche des genähten Abschnitts des aufblasbaren Gurtes (2b, 20, 40) zwischen 1496 mm² und 2288 mm² groß ist.

4. Sicherheitsgurt nach Anspruch 1, wobei ein Abstand von einer Vielzahl von Stichen in dem genähten Abschnitt des aufblasbaren Gurtes 3 mm beträgt.

5. Sicherheitsgurt nach Anspruch 1, wobei ein Abstand zwischen angrenzenden Nahtreihen in dem genähten Abschnitt des aufblasbaren Gurtes 2 mm beträgt.

6. Sicherheitsgurt nach Anspruch 5, wobei eine Vielzahl von Stichen sich in einer Längsrichtung des aufblasbaren Gurtes erstrecken.

7. Sicherheitsgurt nach Anspruch 5, wobei eine Nahtfläche ungefähr 1400 mm² (28 mm × 50 mm) beträgt.

8. Sicherheitsgurt nach Anspruch 5, wobei ein Abstand der Stiche 3 mm beträgt.

9. Sicherheitsgurt nach Anspruch 5, wobei ein Abstand zwischen den angrenzenden Nahtlinien 2 mm beträgt.

10. Sicherheitsgurt nach Anspruch 5, wobei ungefähr 516 Stiche vorhanden sind, die das Gurtband und den aufblasbaren Gurt verbinden.

## Revendications

1. Ceinture de sécurité (2) pour un véhicule, comprenant:
- une languette (5, 10) ayant une ouverture (5a, 14) dans une portion arrière ; et,
- une ceinture gonflable (20, 40) fixée à la languette (5, 10) et dans laquelle un gaz est introduit
**caractérisé en ce qu'**une portion d'extrémité de la ceinture gonflable (20, 40) dans laquelle le gaz est introduit, passe au travers de l'ouverture (5a, 14) et est repliée de sorte que l'extrémité se superpose dessus et est cousue sur la ceinture gonflable (20, 40) à une portion cousue.

2. Ceinture de sécurité selon la revendication 1, dans laquelle la ceinture gonflable (2b, 20, 40) comprend un sac (22, 52) et une sangle tissée (24, 54) enveloppant le sac (22, 52).

3. Ceinture de sécurité selon la revendication 1, dans laquelle une zone de la portion cousue de la ceinture gonflable (2b, 20, 40) fait entre 1496 mm² et 2288 mm².

4. Ceinture de sécurité selon la revendication 1, dans laquelle un pas d'un ensemble de plusieurs points de la portion cousue de la ceinture gonflable est de 3 mm.

5. Ceinture de sécurité selon la revendication 1, dans laquelle un pas entre des lignes de piqûre voisines de la portion cousue de la ceinture gonflable est de 2 mm.

6. Ceinture de sécurité selon la revendication 5, dans laquelle un ensemble de plusieurs points s'étend selon une direction longitudinale de la ceinture gonflable.

7. Ceinture de sécurité selon la revendication 5, dans laquelle une surface de couture est approximativement de 1400 mm² (28 mm x 50 mm).

8. Ceinture de sécurité selon la revendication 5, dans laquelle un pas entre les points est de 3 mm.

9. Ceinture de sécurité selon la revendication 5, dans laquelle un pas entre deux lignes de piqûre voisines est de 2 mm.

10. Ceinture de sécurité selon la revendication 5, dans laquelle il y a approximativement 516 points reliant la sangle et la ceinture gonflable.
